# EUROPÄISCHE PATENTANMELDUNG

(11) **EP 0 985 512 A2**
(43) Veröffentlichungstag der Anmeldung: **15.03.2000**
(21) Anmeldenummer: 99115574.8
(22) Anmeldetag: 06.08.1999
(51) Int. Cl.: B29C 45/76

(54) **Kunststoff-Spritzgiessmaschine sowie Verfahren zum Steuern einer solchen**

(30) Priorität: 13.08.1998 DE 19836835
(71) Anmelder: HEKUMA Herbst Maschinenbau GmbH, 85386 Eching (DE)
(72) Erfinder: Herbst, Richard, 85386 Eching (DE)
(74) Vertreter: Witte, Alexander, Dr.-Ing.

(57) **Zusammenfassung**

Es wird ein Verfahren zum Steuern eines Bewegungsablaufs einer Kunststoff-Spritzgießmaschine (10) beschrieben, die eine Form (12) mit mindestens einem bewegbaren Formwerkzeug (16) sowie ein bewegbares Greifwerkzeug (14) umfaßt, wobei das Greifwerkzeug (14) in einer geöffneten Stellung der Form (12) zwischen wenigstens zwei Formwerkzeuge (16, 17) einfahrbar ist. Dabei definiert die zu dem Greifwerkzeug (14) weisende Seite des bewegbaren Formwerkzeugs (16) eine Störkontur (32) für die Bewegung des Greifwerkzeugs (14). Das Greifwerkzeug (14) passiert die Störkontur (32) erst dann, wenn das bewegbare Formwerkzeug (16) sich aus der Bewegungsbahn des Greifwerkzeugs (14) entfernt hat. Gemäß der vorliegenden Erfindung wird das Greifwerkzeug (14) dabei entlang einer ersten Wegstrecke derart beschleunigt, daß es seine Maximalgeschwindigkeit vor dem Passieren der Störkontur (32) erreicht. Außerdem wird auch eine dem Verfahren entsprechende Kunststoff-Spritzgießmaschine angegeben.

## Beschreibung

Die vorliegende Erfindung betrifft ein Verfahren zum Steuern eines Bewegungsablaufs einer Kunststoff-Spritzgießmaschine, die eine Form mit mindestens einem bewegbaren Formwerkzeug sowie ein bewegbares Greifwerkzeug umfaßt, wobei das Greifwerkzeug in einer geöffneten Stellung der Form zwischen wenigstens zwei Formwerkzeuge einfahrbar ist, wobei ferner die zu dem Greifwerkzeug weisende Seite des bewegbaren Formwerkzeugs bei ihrer Bewegung eine Störkontur für die Bewegung des Greifwerkzeugs definiert und wobei das Greifwerkzeug die Störkontur erst dann passiert, wenn das bewegbare Formwerkzeug sich aus der Bewegungsbahn des Greifwerkzeugs entfernt hat, bei welchem Verfahren das Greifwerkzeug entlang einer ersten Wegstrecke auf eine Maximalgeschwindigkeit beschleunigt wird und dann entlang einer zweiten Wegstrecke bis zu einer Position zwischen den Formwerkzeugen im wesentlichen bis zum Stillstand abgebremst wird.

Die Erfindung betrifft darüber hinaus eine Kunststoff-Spritzgießmaschine mit einer Form, die mindestens zwei Formwerkzeuge umfaßt, von denen wenigstens eines ein bewegbares Formwerkzeug ist, sowie mit einem Greifwerkzeug, das in einer geöffneten Stellung der Form zwischen die Formwerkzeuge einfahrbar ist, wobei die zu dem Greifwerkzeug weisende Seite des bewegbaren Formwerkzeugs bei ihrer Bewegung eine Störkontur für die Einfahrbewegung des Greifwerkzeugs definiert und wobei ferner die Einfahrbewegung des Greifwerkzeugs an einer Ausgangsposition beginnt, die in Bewegungsrichtung des Greifwerkzeugs vor der Störkontur liegt.

Ein derartiges Verfahren und eine derartige Kunststoff-Spritzgießmaschine sind aus der DE 40 03 372 C1 bekannt.

Grundsätzlich umfaßt eine Kunststoff-Spritzgießmaschine eine Form mit mindestens einem Hohlraum, in dem durch Einfüllen eines zunächst noch formbaren Materials ein Formteil oder Werkstück herstellbar ist. Zum Entnehmen des Werkstücks ist es dann erforderlich, die Form zu öffnen. Aus diesem Grund besteht die Form üblicherweise aus wenigstens zwei Formwerkzeugen, die in einem aneinander anliegenden Zustand die Form bilden. Wenigstens eines der Formwerkzeuge ist entlang einer ersten Bewegungsbahn bewegbar und kann dadurch von dem anderen Formwerkzeug abgehoben werden. In diesem Zustand ist die Form geöffnet und ein Greifwerkzeug kann zwischen die Formwerkzeuge einfahren, um das hergestellte Werkstück zu entnehmen. Wie leicht einzusehen ist, müssen diese Bewegungsabläufe, d.h. die Öffnungs- und Schließbewegung der Form und die Ein- bzw. Ausfahrbewegung des Greifwerkzeugs exakt koordiniert sein, um Kollisionen und daraus folgende Beschädigungen an den Formwerkzeugen und dem Greifwerkzeug zu vermeiden. Gleichzeitig sollen diese Bewegungen jedoch auch so schnell wie möglich und mit geringstmöglichen Verzögerungszeiten ausgeführt werden, um im Interesse einer hohen Produktivität die Zykluszeit der Maschine so gering wie möglich zu halten.

In der bereits genannten DE 40 03 372 C1 sind ein Verfahren und eine Vorrichtung zum Steuern der Bewegungen des oder der Formwerkzeuge einer Spritzgießform und des Greifwerkzeugs beschrieben. Dabei ist das Greifwerkzeug in dieser Schrift einem sogenannten Handlinggerät zugeordnet, was jedoch für die nachfolgenden Überlegungen keinen Unterschied macht. Gemäß diesem Dokument werden das bewegbare Formwerkzeug und das Greifwerkzeug in Abhängigkeit von Freigabesignalen bewegt, zu deren Erzeugung die Position und Geschwindigkeit des jeweils anderen Werkzeugs als Kriterium herangezogen werden. Dadurch ist es möglich, das Freigabesignal für das jeweilige eine Werkzeug bereits zu einem Zeitpunkt zu erzeugen, an dem das andere Werkzeug dessen Bewegungsbahn noch nicht vollständig verlassen hat. So wird bspw. die Einfahrbewegung des Greifwerkzeugs in die Form bereits zu einem Zeitpunkt gestartet, an dem das bewegbare Formwerkzeug den Bereich noch nicht vollständig verlassen hat. Dies ist dadurch möglich, daß das Greifwerkzeug zunächst eine gewisse Wegstrecke zurückzulegen hat, bevor es die Störkontur, die das bewegte Formwerkzeug definiert, passiert. Zusätzlich kommen noch Verzögerungs- und Reaktionszeiten hinzu, aufgrund derer eine gewisse Zeit vergeht, bevor das Greifwerkzeug sich nach Erhalt des Freigabesignals tatsächlich in Bewegung setzt. Die sich so insgesamt ergebende Zeitspanne ermöglicht es, die Bewegungen der beiden Werkzeuge mit einer zeitlichen Überlappung durchzuführen.

Durch ein derartiges Verfahren lassen sich die Zykluszeiten einer gattungsgemäßen Spritzgießmaschine, die nicht zuletzt davon abhängen, wie lange die Form zur Entnahme eines Werkstücks geöffnet sein muß, wesentlich reduzieren. Das Verfahren führt jedoch nicht zwangsläufig dazu, daß die Zykluszeiten optimal kurz sind. Es sind vielmehr zahlreiche weitere Parameter zu berücksichtigen, wie insbesondere die Geschwindigkeit und die Beschleunigung, mit der die Werkzeuge bewegt werden. Hierzu enthält die DE 40 03 372 C1 jedoch keine konkreten Angaben.

Aus dem DE-Buch "Wirkungsfeld Spritzgießmaschine", VDI Verlag 1995, S. 183, 192-193, ist es bekannt, daß man im Werkzeuginnenraum der Spritzgießmaschine, d.h. also zwischen den Formwerkzeugen, schnell sein muß, um die Zykluszeit des Gesamtprozesses weitmöglichst zu verkürzen. Dies bedeute, daß das Handhabungsgerät, d.h. das Greifwerkzeug, mit maximal möglicher Beschleunigung arbeiten muß. Es werde also in der Regel auf kurzen Strecken (unter 1000 mm Länge) ein Dreiecks-Geschwindigkeitsprofil abgefahren.

Wie nachfolgend erläutert, führt jedoch eine Steuerung des Greifwerkzeugs mit jeweils maximal möglicher Beschleunigung nicht zwangsläufig dazu, daß die Verweildauer des Greifwerkzeugs innerhalb der geöffneten Form tatsächlich minimal ist. Darüber hinaus führt eine Steuerung des Greifwerkzeugs mit jeweils maximaler Beschleunigung zu maximalen Lastwechseln. Dies ist im Hinblick auf die Belastung der Lager der Maschine und damit im Hinblick auf den Verschleiß nachteilig.

Es ist daher Aufgabe der vorliegenden Erfindung, ein Verfahren der eingangs genannten Art anzugeben, das hinsichtlich der Verweildauer des Greifwerkzeugs zwischen den Formwerkzeugen optimiert ist. Es ist darüber hinaus Aufgabe der Erfindung, eine dem entsprechende Kunststoff-Spritzgießmaschine anzugeben.

Diese Aufgabe wird bei dem eingangs genannten Verfahren dadurch gelöst, daß das Greifwerkzeug die erste Wegstrecke vor dem Passieren der Störkontur durchläuft, so daß es beim Passieren der Störkontur im wesentlichen mit der Maximalgeschwindigkeit bewegt wird.

Unter dem Begriff Maximalgeschwindigkeit wird dabei im folgenden diejenige Geschwindigkeit verstanden, mit der das Greifwerkzeug innerhalb eines längeren Produktionszyklus maximal bewegbar ist. Diese Geschwindigkeit kann jedoch auch unterhalb der absolut möglichen Maximalgeschwindigkeit liegen, wenn diese keinen zerstörungsfreien Dauerbetrieb der Maschine ermöglicht. Insofern steht die Tatsache, daß das Greifwerkzeug bei einer konkreten Maschine im Einzelfall noch geringfügig schneller bewegt werden kann, als dies im Dauerbetrieb tatsächlich geschieht, der vorstehenden Erfindung nicht entgegen.

Der Erfinder der vorliegenden Erfindung hat erkannt, daß es im Hinblick auf eine minimale Verweildauer des Greifwerkzeugs im Bereich zwischen den Formwerkzeugen viel mehr auf die Geschwindigkeit des Greifwerkzeugs als auf seine Beschleunigung ankommt. Zwar hängen die beiden Größen in bekannter Weise miteinander zusammen; wenn jedoch die Wegstrecke, entlang der das Greifwerkzeug bei seiner Einfahrbewegung in die Form beschleunigt wird, zu kurz bemessen ist, dann kann das Greifwerkzeug seine Maximalgeschwindigkeit trotz maximaler Beschleunigung nicht erreichen. Demzufolge ist es vorteilhafter, das Greifwerkzeug über eine verlängerte Wegstrecke, d.h. also mit Anlauf, zwischen die Formwerkzeuge einfahren zu lassen, wobei diese Wegstrecke mindestens so lang bemessen ist, daß das Greifwerkzeug seine Maximalgeschwindigkeit beim Passieren der Störkontur erreicht oder bereits erreicht hat.

Mit der erfindungsgemäßen Maßnahme ist gewährleistet, daß das Greifwerkzeug mit Maximalgeschwindigkeit in den Bereich zwischen den Formwerkzeugen einfährt. Hierdurch ist es möglich, die Verweildauer auf ihr Minimum zu reduzieren.

Nach welchem Geschwindigkeitsverlauf und demzufolge mit welcher Beschleunigung das Greifwerkzeug vor dem Passieren der Störkontur auf seine Maximalgeschwindigkeit gebracht wird, spielt für die Verweildauer innerhalb des Bereichs keine Rolle. Somit ist es im Hinblick auf die Verweildauer gar nicht erforderlich, das Greifwerkzeug außerhalb des Bereichs mit der Maximalbeschleunigung zu beschleunigen. Hierdurch ergeben sich zusätzliche Freiheitsgrade für die Konstruktion und Auslegung einer gattungsgemäßen Maschine.

Damit die Verweildauer des Greifwerkzeugs in dem Bereich zwischen den Formwerkzeugen minimal ist, wird das Greifwerkzeug vom Passieren der Störkontur an so lange wie möglich mit seiner Maximalgeschwindigkeit bewegt und dann vorzugsweise mit maximaler Verzögerung soweit abgebremst, daß es das in der Form befindliche Werkstück aufnehmen kann, d.h. vorzugsweise bis zum Stillstand. Daran anschließend wird das Greifwerkzeug vorzugsweise mit der Maximalbeschleunigung beschleunigt und aus dem Bereich zwischen den Formwerkzeugen wieder herausgefahren.

Alternativ hierzu ist es jedoch auch denkbar, die aufgrund der erfindungsgemäßen Maßnahme nach dem Passieren der Störkontur gewonnene Zeit bspw. dahingehend zu nutzen, das Greifwerkzeug mit einer Verzögerung abzubremsen, die geringer ist als die maximal möglicher Verzögerung. Eine weitere Alternative ist es, das Greifwerkzeug beim Ausfahren aus dem Bereich nicht mit Maximalbeschleunigung zu beschleunigen. In beiden Fällen wäre natürlich die Verweildauer des Greifwerkzeugs in dem Bereich nicht minimal. Wie bereits erwähnt bedeutet jedoch eine maximale Verzögerung bzw. eine maximale Beschleunigung auch eine maximale Belastung der Lager aufgrund der in diesem Fall extremem Lastwechsel sowie eine maximale Leistungsaufnahme der Antriebsmotoren, was im Langzeitbetrieb zu thermischen Problemen führen kann. Sollte es für einen gegebenen Fall nicht unbedingt notwendig sein, die Verweildauer des Greifwerkzeugs innerhalb des Bereichs zwischen den Formwerkzeugen auf ein Minimum zu reduzieren, so könnte die beim Einfahren in den Bereich zwischen den Formwerkzeugen aufgrund der erfindungsgemäßen Maßnahme gewonnene Zeit daher zur Reduzierung des Verschleißes und zur Reduzierung der Energieaufnahme genutzt werden.

Insofern besitzt die erfindungsgemäße Maßnahme den Vorteil, einerseits die Verweildauer des Greifwerkzeugs innerhalb des Bereichs zwischen den Formwerkzeugen minimal zu gestalten, wenn dies benötigt wird, alternativ jedoch den Verschleiß und die Energieaufnahme einer entsprechenden Maschine bei gleichbleibender Verweildauer zu verringern.

Die Aufgabe wird bei einer Kunststoff-Spritzgießmaschine der eingangs genannten Art ferner dadurch gelöst, daß eine erste Wegstrecke des Greifwerkzeugs zwischen der Ausgangsposition und der Störkontur wenigstens so lang ist, daß das Greifwerkzeug entlang dieser ersten Wegstrecke auf eine Maximalgeschwindigkeit beschleunigbar ist.

Diese Maßnahme gewährleistet, daß das Greifwerkzeug mit Maximalgeschwindigkeit die Störkontur passieren kann und somit mit Maximalgeschwindigkeit in den Bereich zwischen den Formwerkzeugen einfahren kann. Wie zuvor erläutert, ist es nur so möglich, die Verweildauer des Greifwerkzeugs innerhalb dieses Bereichs bis zu ihrem Minimum zu verringern.

Aufgrund der genannten Merkmale wird die eingangs genannte Aufgabe somit vollständig gelöst.

Nachfolgend werden vorteilhafte Ausgestaltungen der Erfindung beschrieben.

Nach einer vorteilhaften Ausgestaltung des erfindungsgemäßen Verfahrens endet die erste Wegstrecke an der Störkontur, so daß das Greifwerkzeug die Maximalgeschwindigkeit in etwa beim Passieren der Störkontur erreicht.

Diese Maßnahme besitzt den Vorteil, daß die erste Wegstrecke, entlang der das Greifwerkzeug bis auf seine Maximalgeschwindigkeit beschleunigt wird, nicht länger bemessen ist, als dies im Sinne der vorliegenden Erfindung unbedingt notwendig ist. Auf diese Weise wird der benötigte Bauraum der Maschine gerade so groß gehalten, wie er im Sinne der vorliegenden Erfindung gewählt werden muß.

Gemäß einer weiteren Ausgestaltung des erfindungsgemäßen Verfahrens wird das Greifwerkzeug in dem Bereich zwischen den Formwerkzeugen bis zum Beginn der zweiten Wegstrecke mit der Maximalgeschwindigkeit bewegt und daran anschließend entlang der zweiten Wegstrecke mit einer gleichbleibenden Verzögerung abgebremst.

Diese Maßnahme besitzt den Vorteil, daß das Greifwerkzeug auf diese Weise bei seiner Einfahrbewegung nach dem Passieren der Störkontur solange wie möglich mit seiner Maximalgeschwindigkeit bewegt wird. Im Sinne der vorstehenden Erläuterungen trägt diese Maßnahme dazu bei, das aufgrund der Erfindung mögliche Erreichen der minimalen Verweildauer auch tatsächlich zu realisieren. Alternativ dazu ist es, wie bereits zuvor erläutert, jedoch auch denkbar, die beim Passieren der Störkontur gewonnene Zeit anderweitig zu nutzen. Aufgrund der hier genannten Maßnahme ist jedoch die Zeit, die zwischen dem Passieren der Störkontur und dem Erreichen der Position, an der das Greifwerkzeug das hergestellte Werkstück oder Formteil aufnehmen kann, minimal.

Gemäß einer weiteren vorteilhaften Ausgestaltung des erfindungsgemäßen Verfahrens wird das Greifwerkzeug entlang der ersten Wegstrecke mit einer gleichbleibenden Maximalbeschleunigung beschleunigt.

Diese Maßnahme besitzt den Vorteil, daß hierdurch die erste Wegstrecke so kurz bemessen ist wie möglich. Dies wiederum führt dazu, daß eine entsprechend ausgestaltete Kunststoff-Spritzgießmaschine unter Beibehaltung der durch die Erfindung insgesamt erreichten Vorteile sehr kurz gebaut sein kann. Das hier genannte Merkmal ist besonders vorteilhaft in Kombination mit der ersten vorteilhaften Ausgestaltung, nach der die erste Wegstrecke an der Störkontur endet. Es sei jedoch angemerkt, daß jede dieser beiden Maßnahmen bereits für sich und in Alleinstellung zur Reduzierung der Baugröße verwendet werden kann. Ein weiterer Vorteil dieser Maßnahme ist es, daß somit in dem Steuerungsprogramm der Maschine nur ein Beschleunigungswert anstelle eines Beschleunigungsprofils bestehend aus mehreren Werten abgelegt werden muß. Auf diese Weise läßt sich Speicherplatz einsparen.

Gemäß einer vorteilhaften Ausgestaltung der zuletzt genannten Maßnahme ist die Länge der ersten Wegstrecke größer als 10 cm, vorzugsweise liegt sie im Bereich zwischen 15 cm und 70 cm und besonders bevorzugt im Bereich zwischen 20 cm und 40 cm.

Diese Maßnahme besitzt den Vorteil, daß sie angesichts der derzeit erreichbaren Maximalbeschleunigungen des Greifwerkzeuges von ca. 50 bis 60 m/s² und der möglichen Maximalgeschwindigkeiten von ca. 5 bis 6 m/s eine Realisierung des erfindungsgemäßen Verfahrens zuverlässig gewährleistet. Die bevorzugten Größenbereiche stellen darüber hinaus einen vorteilhaften Kompromiß hinsichtlich der erforderlichen Baugröße der Maschine dar.

Gemäß einer weiteren vorteilhaften Ausgestaltung der Erfindung wird das Greifwerkzeug zunächst entlang eines ersten Abschnitts der ersten Wegstrecke mit einer ersten Beschleunigung beschleunigt und dann entlang eines weiteren Abschnitts der ersten Wegstrecke mit einer zweiten Beschleunigung beschleunigt, wobei die zweite Beschleunigung größer ist als die erste Beschleunigung.

Diese Maßnahme macht in vorteilhafter Weise davon Gebrauch, daß der Geschwindigkeitsverlauf des Greifwerkzeugs vor dem Passieren der Störkontur für die Verweildauer des Greifwerkzeugs innerhalb des Bereichs keine Rolle spielt. Sie besitzt den Vorteil, daß ein Anfahren des Greifwerkzeugs mit einer zunächst geringeren Beschleunigung geringere Lastwechsel und damit einen geringeren Verschleiß hervorruft. Nach dem Anfahren des Greifwerkzeugs kann die Beschleunigung dann erhöht werden, um dann im Sinne einer kurzen Bauform der Maschine die Maximalgeschwindigkeit schneller zu erreichen. Neben dem auf diese Weise reduzierten Lastwechsel ist auch die zur Beschleunigung des Greifwerkzeugs erforderliche Energieaufnahme, geringer.

Ein weiterer Vorteil dieser Maßnahme ergibt sich im Zusammenhang mit einer immer in Betracht zu ziehenden oder möglichen Störung der Bewegungsabläufe. Eine derartige Störung tritt bspw. dann auf, wenn sich das bewegbare Formwerkzeug verklemmt und dementsprechend seine Öffnungsbewegung verspätet oder gar nicht ausführt. In diesem Fall ist es unbedingt notwendig, die Bewegung des Greifwerkzeugs durch einen Notstop abzubrechen, um eine Kollision zu vermeiden. Vielfach treten derartige Störungen gerade zu Beginn der jeweiligen Bewegungsabläufe auf. Wenn in diesem Fall entsprechend der hier erläuterten vorteilhaften Ausgestaltung der Erfindung die Beschleunigung des Greifwerkzeugs zu Beginn relativ gering ist, steht so gerade zu Beginn des Bewegungsablaufs mehr Zeit für einen Notstop des Greifwerkzeugs zur Verfügung. Gleichzeitig ist in diesem Fall auch der Lastwechsel im Fall eines Notstops geringer.

Gemäß einer vorteilhaften Ausgestaltung der zuvor beschriebenen Maßnahme ist die zweite Beschleunigung die Maximalbeschleunigung.

Diese Maßnahme ist eine Weiterbildung der bereits zuvor erläuterten vorteilhaften Ausgestaltung und besitzt demzufolge dieselben Vorteile. Darüber hinaus besitzt sie den Vorteil, daß sie das Greifwerkzeug zumindest im letzten Abschnitt vor dem Passieren der Störkontur mit der Maximalbeschleunigung beschleunigt. Auf diese Weise kann der letzte Abschnitt hinsichtlich seiner Weglänge kürzer bemessen sein, als wenn das Greifwerkzeug mit einer geringeren Beschleunigung als der Maximalbeschleunigung beschleunigt würde. Dies ist wiederum im Hinblick auf die Reduzierung der Bauform bzw. Baugröße der Spritzgießmaschine vorteilhaft.

Besonders bevorzugt ist es, wenn der weitere Abschnitt, ab dem das Greifwerkzeug mit der Maximalbeschleunigung beschleunigt wird, an der Position beginnt, ab der ein Notstop des Greifwerkzeugs eine Kollision nicht mehr verhindern kann. Dies ist dann der Fall, wenn das Greifwerkzeug aufgrund seiner Trägheit nicht mehr abgebremst werden kann, ohne die Störkontur zu passieren. Aufgrund der hier genannten Ausgestaltung ist dieser letzte Abschnitt so kurz wie möglich und wird so schnell wie möglich durchlaufen.

Gemäß einer weiteren Ausgestaltung des erfindungsgemäßen Verfahrens wird das Greifwerkzeug beim Ausfahren zunächst mit der Maximalbeschleunigung auf die Maximalgeschwindigkeit beschleunigt und daran anschließend wenigstens solange mit der Maximalgeschwindigkeit bewegt, bis es den Bereich zwischen den Formwerkzeugen verlassen hat.

Diese Maßnahme besitzt den Vorteil, daß die Verweildauer des Greifwerkzeugs in dem Bereich zwischen den Formwerkzeugen auch bei der Ausfahrbewegung so weit wie möglich minimiert wird. Demzufolge ist diese Maßnahme vorteilhaft, wenn die Verweildauer des Greifwerkzeugs innerhalb des Bereichs tatsächlich auf ihren Minimalwert reduziert werden soll.

Gemäß einer weiteren vorteilhaften Ausgestaltung der Erfindung wird das Greifwerkzeug nach dem Verlassen des Bereichs zwischen den Formwerkzeugen mit einer Verzögerung abgebremst, die geringer ist als die Maximalverzögerung.

Diese Maßnahme besitzt wiederum den Vorteil, daß sie zu geringeren Lastwechseln führt und dementsprechend die Lager des Greifwerkzeugs weniger belastet. Somit wird der Verschleiß reduziert.

Gemäß einer weiteren vorteilhaften Ausgestaltung der Erfindung wird die Einfahrbewegung des Greifwerkzeugs zeitlich bereits vor oder während der Öffnungsbewegung des Formwerkzeugs gestartet.

Diese Maßnahme besitzt den Vorteil, daß das erfindungsgemäße Verfahren mit den an sich bereits bekannten Verfahren zur Überlappung der Bewegungsabläufe des Greifwerkzeugs und der Formwerkzeuge kombiniert wird. Erst durch eine derartige Kombination kann über die Verweildauer hinaus auch die Zykluszeit der Spritzgießmaschine minimiert werden.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Nachfolgend werden Ausführungsbeispiele der Erfindung anhand einer Zeichnung erläutert. Es zeigen:
- Fig. 1: eine schematische Darstellung einer erfindungsgemäßen Kunststoff-Spritzgießmaschine mit geschlossenen Formwerkzeugen und einem Greifwerkzeug,
- Fig. 2: die Kunststoff-Spritzgießmaschine aus Fig. 1 mit teilweise geöffneten Formwerkzeugen,
- Fig. 3: die Kunststoff-Spritzgießmaschine mit vollständig geöffneten Formwerkzeugen,
- Fig. 4: ein Geschwindigkeits-Weg-Diagramm, das die Einfahrbewegung des Greifwerkzeugs bei einer Kunststoff-Spritzgießmaschine nach dem Stand der Technik verdeutlicht,
- Fig. 5: ein Geschwindigkeits-Weg-Diagramm für das Greifwerkzeug nach dem erfindungsgemäßen Verfahren,
- Fig. 6: ein Geschwindigkeits-Weg-Diagramm eines alternativen Ausführungsbeispiels des erfindungsgemäßen Verfahrens und
- Fig. 7: ein Geschwindigkeits-Weg-Diagramm für die Ausfahrbewegung des Greifwerkzeugs.

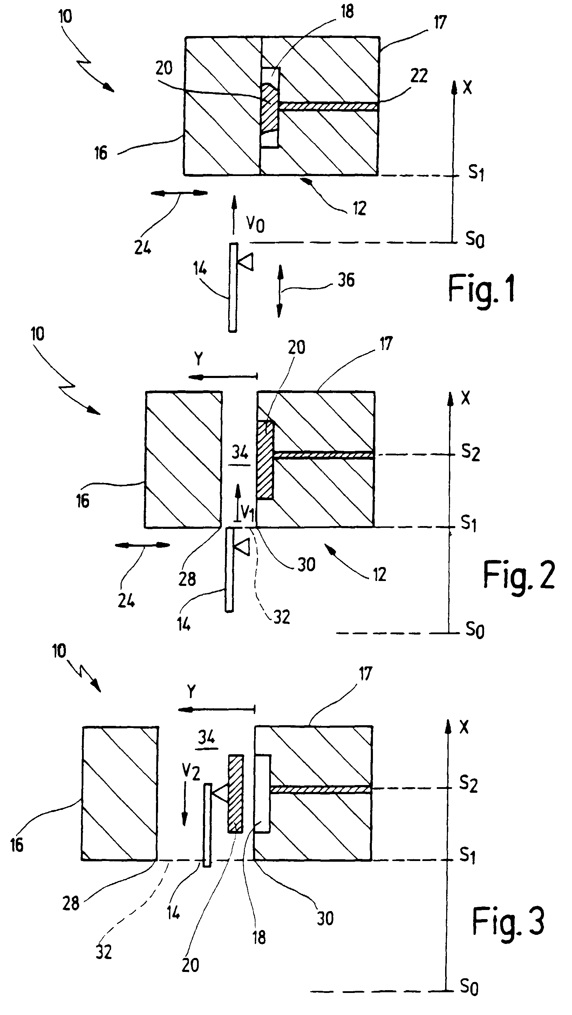

In den Fig. 1 bis 3 ist eine schematisch dargestellte Kunststoff-Spritzgießmaschine gemäß der vorliegenden Erfindung insgesamt mit der Bezugsziffer 10 bezeichnet.

Die Kunststoff-Spritzgießmaschine 10 umfaßt eine Form 12 sowie ein Greifwerkzeug 14. Dabei ist es für die vorliegende Erfindung ohne Bedeutung, ob das Greifwerkzeug 14 Bestandteil eines eigenen Handlinggerätes oder Bestandteil der Kunststoff-Spritzgießmaschine selbst ist.

Die Form 12 umfaßt in der vorliegenden Darstellung zwei Formwerkzeuge 16, 17, die in der Darstellung in Fig. 1 aneinander anliegen und dabei einen Hohlraum 18 ausbilden, in dem durch Einfüllen eines zunächst noch formbaren und später aushärtenden Materials ein Werkstück 20 herstellbar ist. Das zunächst noch formbare Material wird dabei über einen Kanal 22 dem Hohlraum 18 zugeführt.

Wie anhand Fig. 2 zu erkennen ist, ist das Formwerkzeug 16 in der Lage, eine Öffnungs- und Schließbewegung 24 entlang einer als Y-Achse bezeichneten Achse ausführen.

Die Formwerkzeuge 16 und 17 weisen an ihrer dem Greifwerkzeug 14 zugewandten Seite eine Kante oder Fläche 28, 30 auf. Die Kante 28 des bewegbaren Formwerkzeugs 16 definiert dabei eine Störkontur 32 für die Bewegung des Greifwerkzeugs 14. Mit dem Passieren der Störkontur 32 gelangt das Greifwerkzeug 14 in den Bereich 34 zwischen den Formwerkzeugen 16 und 17.

Die Einfahr- bzw. Ausfahrbewegung 36 des Greifwerkzeugs 14 erfolgt entlang einer X-Achse, die im vorliegenden Ausführungsbeispiel senkrecht zur Y-Achse der Öffnungs- und Schließbewegung 24 liegt. Dies ist jedoch nicht unbedingt erforderlich.

Wie anhand der in den Fig. 1 bis 3 schematisch gezeigten Verfahrensstellungen erkennbar ist, fährt das Greifwerkzeug 14 ausgehend von einer Ausgangsposition S₀ in die Form 12 ein. Die Anfangsgeschwindigkeit des Greifwerkzeugs 14 ist dabei mit V₀ bezeichnet. Während sich das Greifwerkzeug 14 auf die Form 12 zu bewegt, wird das bewegbare Formwerkzeug 16 in Richtung der Y-Achse verfahren, wodurch die Form 12 geöffnet wird. Die Bewegungen des Greifwerkzeugs 14 und des bewegbaren Formwerkzeugs 16 erfolgt somit wenigstens teilweise überlappend. Es genügt hierbei, daß das bewegbare Formwerkzeug 16 sich in dem Moment, zu dem das Greifwerkzeug 14 die Störkontur 32 passiert, gerade soweit bewegt hat, daß das Greifwerkzeug 14 an der Kante 28 des Formwerkzeugs 16 vorbei paßt.

In Fig. 2 ist der Moment dargestellt, zu dem das Greifwerkzeug 14 die Störkontur 32, die auf der X-Achse mit der Position S₁ bezeichnet ist, passiert. In diesem Moment besitzt das Greifwerkzeug 14 die Geschwindigkeit V₁. Auf diese Geschwindigkeit wird das Greifwerkzeug 14 entlang der Wegstrecke von S₀ bis S₁ beschleunigt.

Es sei an dieser Stelle angemerkt, daß die Kante 28 entgegen der hier dargestellten Ausführung auch abgerundet sein kann oder bspw. eine Ausnehmung aufweisen kann, aufgrund der das Greifwerkzeug 14 noch dichter an das bewegbare Formwerkzeug 16 selbst herangefahren werden kann.

In Fig. 3 befindet sich das bewegbare Formwerkzeug 16 in seiner geöffneten Endposition. Das Greifwerkzeug 14 hat demgegenüber eine Position S₂ erreicht, an der es das hergestellte Werkstück 20 aus der Form 12 aufnimmt. Hierzu ist es bekannt, daß bspw. das Formwerkzeug 17 mit hier nicht dargestellten Auswerfern versehen ist, die das Werkstück 20 aus dem Hohlraum 18 herausdrücken. Diese Auswerfer sind mit der Bewegung des Greifwerkzeugs 14 koordiniert.

Nach dem Aufnehmen des Werkstücks 20 wird das Greifwerkzeug 14 in dem hier gezeigten Ausführungsbeispiel rückwärts aus der Form 12 herausgefahren. Gleichzeitig oder in entsprechender zeitlicher Koordination wird dabei das bewegbare Formwerkzeug 16 wieder in Richtung des Formwerkzeugs 17 verfahren, um die Form 12 für den nächsten Herstellungsvorgang zu schließen. Die Koordination der Bewegungsabläufe des Greifwerkzeugs 14 und des bewegbaren Formwerkzeugs 16 erfolgt dabei bspw. über bereits eingangs erwähnte Freigabesignale.

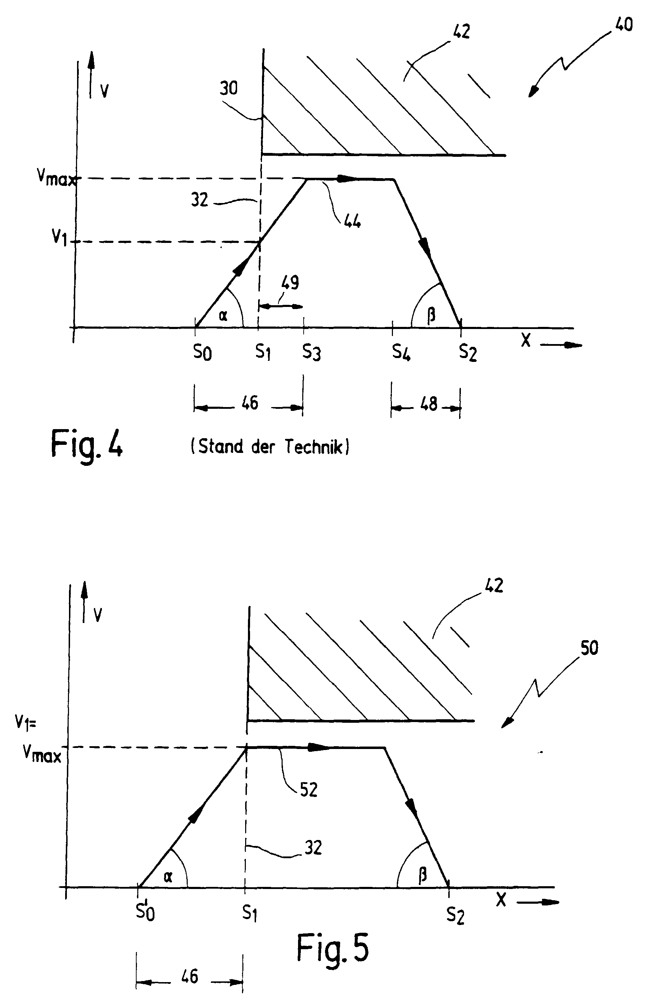

In Fig. 4 ist ein Geschwindigkeits-Weg-Diagramm zur Erläuterung des Bewegungsablaufs des Greifwerkzeugs 14 insgesamt mit der Bezugsziffer 40 bezeichnet.

Entlang der X-Achse sind die Positionen des Greifwerkzeugs 14 angegeben, die bereits in Fig. 1 bis 3 gezeigt sind. Mit 42 ist schematisch die Lage des Formwerkzeugs 17 angedeutet. Die Störkontur 32 befindet sich an der Position S₁. Mit 44 ist der Verlauf der Geschwindigkeit des Greifwerkzeugs 14 während seiner Einfahrbewegung bezeichnet.

Der Verlauf 44 gibt ein Verfahren nach dem Stand der Technik wieder. Dabei wird das Greifwerkzeug 14 ausgehend von der Ausgangsposition S₀ entlang einer ersten Wegstrecke 46 beschleunigt. Dementsprechend nimmt seine Geschwindigkeit entlang der Wegstrecke 46 zu.

Es sei an dieser Stelle angemerkt, daß sich die Beschleunigung des Greifwerkzeugs 14 in diesem Fall nicht direkt durch Differenzieren des Verlaufs 44 ergibt, da der Verlauf 44 hier nicht ein zeitlicher, sondern ein räumlicher Geschwindigkeitsverlauf ist. Nichtsdestotrotz ist die Steigung des Verlaufs 44 auch in dieser Darstellung ein Maß für die jeweilige Beschleunigung.

Das Greifwerkzeug 14 wird entlang der ersten Wegstrecke 46 mit konstanter Beschleunigung, die hier der Maximalbeschleunigung entspricht, auf seine Maximalgeschwindigkeit Vₘₐₓ beschleunigt. Der in der Darstellung eingezeichnete Winkel α ist ein Maß für die Maximalbeschleunigung. Die Geschwindigkeit in dem Moment, zu dem das Greifwerkzeug 14 die Störkontur 32 passiert, ist mit V₁ bezeichnet. Sie ist, wie dem Verlauf zu entnehmen ist, geringer als die Maximalgeschwindigkeit Vₘₐₓ.

Gemäß dem zweiten Teil des Geschwindigkeitsverlaufs 44 wird das Greifwerkzeug 14 beginnend bei der Position S₄ entlang der zweiten Wegstrecke 48 bis zum Stillstand bei der Position S₂ abgebremst. Die Verzögerung, für die der Winkel β ein Maß ist, ist hier die Maximalverzögerung. Die Maximalbeschleunigung (α) und die Maximalverzögerung (β) sind betragsmäßig nicht unbedingt identisch, was sich daraus ergibt, daß die Verzögerung technisch und konstruktiv anders erreicht wird als die Beschleunigung. Im vorliegenden Fall ist die Maximalverzögerung (β) betragsmäßig größer als die Maximalbeschleunigung (α).

In dem Bereich zwischen der ersten Wegstrecke 46 und der zweiten Wegstrecke 48 wird das Greifwerkzeug 14 mit seiner Maximalgeschwindigkeit Vₘₐₓ bewegt. Es ist jedoch ebenfalls bekannt, daß die Wegstrecken 46 und 48 sowie die Größe des Bereichs zwischen den Formwerkzeugen 16 und 17 so bemessen sind, daß der Geschwindigkeitsverlauf 44 ein Dreiecksprofil annimmt, d.h. daß sich an die Beschleunigungsphase entlang der Wegstrecke 46 direkt die Verzögerungsphase entlang der Wegstrecke 48 anschließt.

Nachteilig an diesem bekannten Geschwindigkeitsverlauf 44 ist der Abschnitt 49 der Wegstrecke 46. Dieser Abschnitt beginnt an der Position S₁, an der das Greifwerkzeug 14 die Störkontur 32 passiert, und reicht bis zur Position S₃, an der das Greifwerkzeug 14 seine Maximalgeschwindigkeit Vₘₐₓ erreicht. Entlang dieses Abschnitts 49 bewegt sich das Greifwerkzeug 14 bereits innerhalb des Bereichs 34, jedoch noch nicht mit maximal möglicher Geschwindigkeit Vₘₐₓ. Dementsprechend wird hier wertvolle Zeit verschenkt.

In Fig. 5 ist ein erfindungsgemäßes Geschwindigkeits-Weg-Diagramm insgesamt mit der Bezugsziffer 50 bezeichnet. Gleiche Bezugszeichen bezeichnen dabei dieselben Elemente, die bereits im bezug zu den vorhergehenden Figuren erläutert wurden.

Entsprechend dem Geschwindigkeitsverlauf 52 wird das Greifwerkzeug 14 wiederum entlang der ersten Wegstrecke 46 auf seine Maximalgeschwindigkeit Vₘₐₓ beschleunigt, wobei die erste Wegstrecke 46 hier jedoch so bemessen ist, daß das Greifwerkzeug 14 die Maximalgeschwindigkeit Vₘₐₓ bei der Position S₁ erreicht. Demzufolge passiert das Greifwerkzeug 14 die Störkontur bereits mit seiner Maximalgeschwindigkeit Vₘₐₓ.

Der Ausgangspunkt S₀', der den Beginn der Wegstrecke 46 hier markiert, liegt folglich weiter von der Störkontur 32 entfernt als der Ausgangspunkt S₀ in Fig. 4.

Wie anhand des Verlaufs 52 im Vergleich zum Verlauf 44 erkennbar ist, bewegt sich das Greifwerkzeug 14 bei dem erfindungsgemäßen Verfahren innerhalb des Bereichs 34 länger mit seiner Maximalgeschwindigkeit Vₘₐₓ. Dementsprechend ist die innerhalb des Bereichs 34 erreichte Durchschnittsgeschwindigkeit bei ansonsten identischen Rahmenbedingungen größer als bei dem Verlauf in Fig. 4. In folge dessen ist dann die Verweildauer des Greifwerkzeugs 14 innerhalb des Bereichs 34 kürzer als bei dem Verlauf 44.

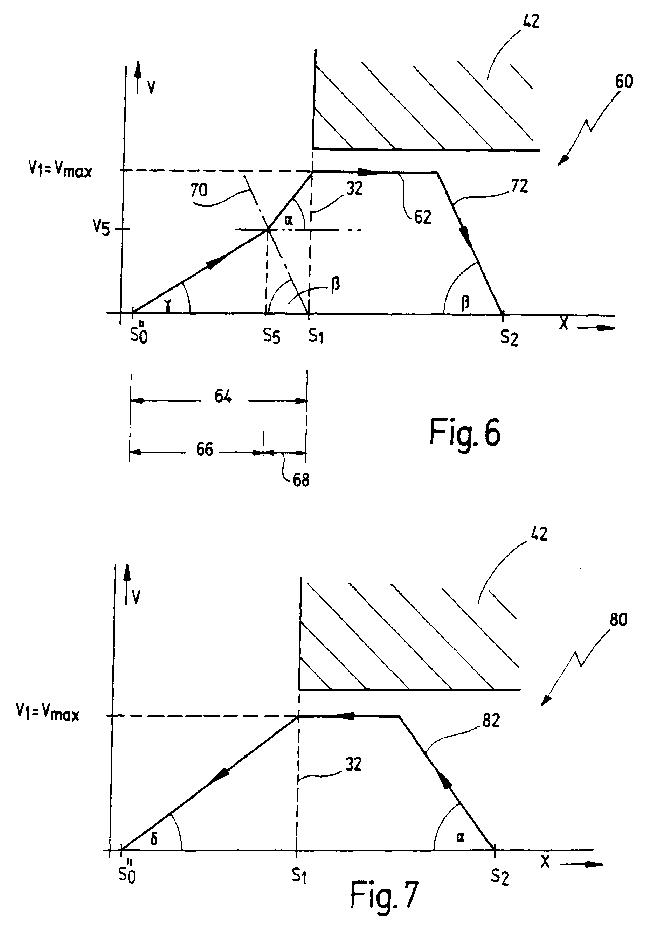

In dem alternativen Ausführungsbeispiel gemäß Fig. 6 ist ein Geschwindigkeits-Weg-Diagramm insgesamt mit dem Bezugszeichen 60 bezeichnet. Der Geschwindigkeitsverlauf 62 entspricht hier ab der Position S₁, bei der das Greifwerkzeug 14 die Störkontur 32 passiert, dem Geschwindigkeitsverlauf 52. Der Verlauf 62 unterscheidet sich jedoch von dem Verlauf 52 vor dem Passieren der Störkontur 32 in der nachfolgend beschriebenen Weise.

Auch in diesem Ausführungsbeispiel wird das Greifwerkzeug 14 entlang einer ersten Wegstrecke 64 ausgehend von einer Ausgangsposition S₀'' bis auf seine Maximalgeschwindigkeit beschleunigt. Dabei wird auch in diesem Fall die Maximalgeschwindigkeit in dem Moment erreicht, an dem das Greifwerkzeug 14 die Störkontur 32 passiert. Im Unterschied zum vorhergehenden Ausführungsbeispiel wird das Greifwerkzeug 14 jedoch entlang eines ersten Abschnitts 66 der ersten Wegstrecke 64 mit einer Beschleunigung (γ) beschleunigt, die geringer ist als die Maximalbeschleunigung (α).

Der erste Abschnitt 66 endet an einer Position S₅. An dieser Position beginnt ein weiterer Abschnitt 68 der ersten Wegstrecke 64. Entlang des weiteren Abschnitts 68 wird das Greifwerkzeug 14 mit der Maximalbeschleunigung (α) beschleunigt. Die Länge des weiteren Abschnitts 68 entspricht gerade dem kürzesten Bremsweg des Greifwerkzeugs 14 aus seiner zu Beginn dieses Abschnitts erreichten Geschwindigkeit. Dies ist anhand der Geraden 70 verdeutlicht, entlang der die Geschwindigkeit im Fall eines Abbremsens mit maximaler Verzögerung (β) verläuft.

Die Position S₅, an der der weitere Abschnitt 68 beginnt, ist die Position, an der spätestens ein Notstop ausgelöst werden muß, um das Greifwerkzeug 14 noch vor dem Passieren der Störkontur zum Halten zu bringen.

In Fig. 7 ist ein weiteres Geschwindigkeits-Weg-Diagramm mit dem Bezugszeichen 80 bezeichnet. Dabei verdeutlicht der Geschwindigkeitsverlauf 82, wie das Greifwerkzeug 14 nach der Aufnahme des Werkstücks 20 wieder aus der Form 12 herausgefahren wird.

Entsprechend dem Verlauf 82 wird das Greifwerkzeug 14 in diesem Fall ausgehend von seiner Endposition S₂ mit der Maximalbeschleunigung (α) auf seine Maximalgeschwindigkeit Vₘₐₓ beschleuigt und sodann solange mit der Maximalgeschwindigkeit Vₘₐₓ bewegt, bis es die Störkontur 32 erneut passiert und dabei den Bereich 34 verläßt. Ab diesem Punkt S₁ wird das Greifwerkzeug 14 mit einer Verzögerung (δ), die geringer ist als die maximal mögliche Verzögerung (β), abgebremst. Die Verzögerung (δ) ist im vorliegenden Fall so bemessen, daß das Greifwerkzeug 14 an der Position S₀'' zum Stillstand kommt.

Neben den hier beschriebenen Ausführungsbeispielen sind weitere Ausführungen der Erfindung möglich. So liegt es ebenfalls im Rahmen der Erfindung, wenn die erste Wegstrecke im Zusammenhang mit der dort erfolgenden Beschleunigung so bemessen ist, daß das Greifwerkzeug 14 seine Maximalgeschwindigkeit Vₘₐₓ nicht erst beim Erreichen der Störkontur 32, sondern bereits vorher, d.h. vor dem Erreichen der Position S₁ annimmt.

Des weiteren ist die Erfindung auch bei einer Kunststoff-Spritzgießmaschine mit einem Etagenwerkzeug anwendbar, wie sie beispielsweise in der EP 0 576 837 beschrieben ist.

## Patentansprüche

1. Verfahren zum Steuern eines Bewegungsablaufs einer Kunststoff-Spritzgießmaschine (10), die eine Form (12) mit mindestens einem bewegbaren Formwerkzeug (16) sowie ein bewegbares Greifwerkzeug (14) umfaßt, wobei das Greifwerkzeug (14) in einer geöffneten Stellung der Form (12) zwischen wenigstens zwei Formwerkzeuge (16, 17) einfahrbar ist, wobei ferner die zu dem Greifwerkzeug (14) weisende Seite des bewegbaren Formwerkzeugs (16) bei ihrer Bewegung eine Störkontur (32) für die Bewegung des Greifwerkzeugs (14) definiert und wobei das Greifwerkzeug (14) die Störkontur (32) erst dann passiert, wenn das bewegbare Formwerkzeug (16) sich aus der Bewegungsbahn des Greifwerkzeugs (14) entfernt hat, bei welchem Verfahren das Greifwerkzeug (14) entlang einer ersten Wegstrecke (46; 64) auf eine Maximalgeschwindigkeit (Vₘₐₓ) beschleunigt wird und dann entlang einer zweiten Wegstrecke (48) bis zu einer Position (S₂) zwischen den Formwerkzeugen (16, 17) im wesentlichen bis zum Stillstand abgebremst wird, dadurch gekennzeichnet, daß das Greifwerkzeug (14) die erste Wegstrecke (46; 64) vor dem Passieren der Störkontur (32) durchläuft, so daß es beim Passieren der Störkontur (32) im wesentlichen mit der Maximalgeschwindigkeit (vₘₐₓ) bewegt wird.

2. Verfahren nach Anspruch 1, dadurch gekennzeichnet, daß die erste Wegstrecke (46; 64) an der Störkontur (32) endet, so daß das Greifwerkzeug (14) die Maximalgeschwindigkeit (vₘₐₓ) in etwa beim Passieren der Störkontur (32) erreicht.

3. Verfahren nach Anspruch 1 oder 2, dadurch gekennzeichnet, daß das Greifwerkzeug (14) in einem Bereich (34) zwischen den Formwerkzeugen (16, 17) bis zum Beginn der zweiten Wegstrecke (48) mit der Maximalgeschwindigkeit (vₘₐₓ) bewegt und daran anschließend entlang der zweiten Wegstrecke (48) mit einer gleichbleibenden Verzögerung (β) abgebremst wird.

4. Verfahren nach einem der Ansprüche 1 bis 3, dadurch gekennzeichnet, daß das Greifwerkzeug (14) entlang der ersten Wegstrecke (46) mit einer gleichbleibenden Maximalbeschleunigung (α) beschleunigt wird.

5. Verfahren nach Anspruch 4, dadurch gekennzeichnet, daß die Länge der ersten Wegstrecke (46) größer ist als 10 cm, vorzugsweise im Bereich zwischen 15 cm und 70 cm und besonders bevorzugt im Bereich zwischen 20 cm und 40 cm liegt.

6. Verfahren nach einem der Ansprüche 1 bis 3, dadurch gekennzeichnet, daß das Greifwerkzeug (14) zunächst entlang eines ersten Abschnitts (66) der ersten Wegstrecke (64) mit einer ersten Beschleunigung (γ) und dann entlang eines weiteren Abschnitts (68) der ersten Wegstrecke (64) mit einer zweiten Beschleunigung (α) beschleunigt wird, wobei die zweite Beschleunigung (α) größer ist als die erste Beschleunigung (γ).

7. Verfahren nach Anspruch 6, dadurch gekennzeichnet, daß die zweite Beschleunigung (α) die Maximalbeschleunigung ist.

8. Verfahren nach Anspruch 6 oder 7, dadurch gekennzeichnet, daß die Länge des weiteren Abschnitts (68) kleiner oder gleich einem Bremsweg (70) des Greifwerkzeugs (14) bezogen auf dessen Geschwindigkeit (v₅) zu Beginn des weiteren Abschnitts (68) bei einer Maximalverzögerung (β) ist.

9. Verfahren nach einem der Ansprüche 1 bis 8, dadurch gekennzeichnet, daß das Greifwerkzeug (14) beim Ausfahren (82) zunächst mit der Maximalbeschleunigung (α) auf die Maximalgeschwindigkeit (vₘₐₓ) beschleunigt wird und daran anschließend wenigstens solange mit der Maximalgeschwindigkeit (vₘₐₓ) bewegt wird, bis es einen Bereich (34) zwischen den Formwerkzeugen (16, 17) verlassen hat.

10. Verfahren nach Anspruch 9, dadurch gekennzeichnet, daß das Greifwerkzeug (14) nach dem Verlassen des Bereichs (34) mit einer Verzögerung (δ) abgebremst wird, die geringer ist als eine Maximalverzögerung (β).

11. Verfahren nach einem der Ansprüche 1 bis 10, dadurch gekennzeichnet, daß die Einfahrbewegung (26, 52; 62) des Greifwerkzeugs (14) zeitlich bereits vor oder während der Öffnungsbewegung (24) des Formwerkzeugs (16) gestartet wird.

12. Kunststoff-Spritzgießmaschine mit einer Form (12), die mindestens zwei Formwerkzeuge (16, 17) umfaßt, von denen wenigstens eines ein bewegbares Formwerkzeug (16) ist, sowie mit einem Greifwerkzeug (14), das in einer geöffneten Stellung der Form (12) zwischen die Formwerkzeuge (16, 17) einfahrbar ist, wobei die zu dem Greifwerkzeug (14) weisende Seite des bewegbaren Formwerkzeugs (16) bei ihrer Bewegung eine Störkontur (32) für die Einfahrbewegung des Greifwerkzeug (14) definiert und wobei ferner die Einfahrbewegung des Greifwerkzeugs (14) an einer Ausgangsposition (S₀; S₀'; S₀'') beginnt, dadurch gekennzeichnet, daß eine erste Wegstrecke (46; 64) zwischen der Ausgangsposition (S₀; S₀'; S₀'') und der Störkontur (32) wenigstens so lang ist, daß das Greifwerkzeug (14) entlang dieser ersten Wegstrecke (46; 64) auf eine Maximalgeschwindigkeit (Vₘₐₓ) beschleunigbar ist.

13. Kunststoff-Spritzgießmaschine nach Anspruch 12, dadurch gekennzeichnet, daß die erste Wegstrecke (46; 64) so bemessen ist, daß das Greifwerkzeug (14) bei vorgegebenem Beschleunigungsverlauf (α, γ) die Maximalgeschwindigkeit (Vₘₐₓ) bei Passieren der Störkontur (32) erreicht.

14. Kunststoff-Spritzgießmaschine nach Anspruch 12 oder 13, dadurch gekennzeichnet, daß die Länge der ersten Wegstrecke (46; 64) größer als 10 cm ist, vorzugsweise im Bereich zwischen 15 cm und 70 cm und besonders bevorzugt im Bereich zwischen 20 cm und 40 cm liegt.
